# EUROPÄISCHE PATENTSCHRIFT

(11) **EP 1 890 973 B1**
(45) Veröffentlichungstag und Bekanntmachung des Hinweises auf die Patenterteilung: **23.05.2012**
(21) Anmeldenummer: 06753918.9
(22) Anmeldetag: 26.05.2006
(51) Int. Cl.: C02F 3/08, C02F 11/12, C02F 3/12

(54) **VERFAHREN UND VORRICHTUNG ZUM REINIGEN VON ABWÄSSERN**
METHOD ANDS DEVICE FOR PURIFICATION OF EFFLUENT
PROCEDE ET DISPOSITIF D'EPURATION DES EAUX RESIDUAIRES

(30) Priorität: 10.06.2005 DE 102005026878
(43) Veröffentlichungstag der Anmeldung: 27.02.2008
(73) Patentinhaber: Papierfabrik August Koehler AG, 77704 Oberkirch (DE)
(72) Erfinder: KRAFT, Harald, 77704 Oberkirch-Nussbach (DE); ARMBRUSTER, Hans-Thomas, 77855 Achern-Grossweier (DE); BENZ, Wendelin, 77704 Oberkirch-Zusenhofen (DE)
(74) Vertreter: Hagemann, Heinrich
(86) Internationale Anmeldenummer: PCT/EP2006/005062
(87) Internationale Veröffentlichungsnummer: WO 2006/131219

(56) Entgegenhaltungen:
- US-A1- 2005 023 216
- PATENT ABSTRACTS OF JAPAN Bd. 2003, Nr. 11, 5. November 2003 (2003-11-05) -& JP 2003 181488 A (SHINKO PANTEC CO LTD; MITSUI ENG & SHIPBUILD CO LTD), 2. Juli 2003 (2003-07-02)
- PATENT ABSTRACTS OF JAPAN Bd. 2003, Nr. 12, 5. Dezember 2003 (2003-12-05) -& JP 2005 193165 A (EBARA CORP), 21. Juli 2005 (2005-07-21)

## Beschreibung

Die Erfindung betrifft ein Verfahren und eine Vorrichtung zum Reinigen von Abwässern, insbesondere von Abwässern, welche bei der Papierherstellung anfallen.

Eine Vorrichtung mit den Merkmalen des Oberbegriffs des Anspruchs 15 ist aus der DE 101 48 474 A1 bekannt.

Biologische Abwasser-Reinigungsanlagen zur Reinigung von in Papierfabriken abfallenden Abwässern sind gegenwärtig weit verbreitet. Derartige Anlagen weisen im allgemeinen eine aerobe Belebungsstufe sowie eine Nachklärungsstufe auf. In der Belebungsstufe befinden sich als Belebtschlamm adaptierte Mikroorganismen, welche die im Abwasser vorhandenen organischen Stoffe unter Verbrauch von Sauerstoff abbauen. Endprodukte dieser Vorgänge sind für gewöhnlich Kohlendioxid, Wasser und Biomasse. Im Nachklärbecken, das der Belebungsstufe nachgeschaltet ist, findet eine Abtrennung des Belebtschlamm- Wassergemisches statt. Eine derartige Anlage ist beispielsweise in der Druckschrift PTS-MS 10/94 "Betrieb biologischer Abwasser-Reinigungsanlagen in Papierfabriken, Überwachung, Kontrolle und Optimierung" der Papiertechnischen Stiftung, Heßstraße 134, D-80797 München, offenbart.

Eine Erhöhung der hydraulischen Kapazität dieser bekannten Vorrichtung bzw. dieses bekannten Verfahrens wird bei dem Verfahren bzw. der Vorrichtung gemäß DE 101 48 474 A1 dadurch erreicht, dass zusätzlich zur Nachklärung ein Teil des aus der Belebungsstufe austretenden Abwasser-Belebtschlammgemisches in einem Entwässerungsaggregat entwässert wird. Der beim Nachklären und Entwässern abgeschiedene Belebtschlamm wird dabei in das Belebtschlammbecken zumindest teilweise rückgeführt. Diese bekannte Vorrichtung bzw. dieses bekannte Verfahren sind besonders, aber nicht ausschließlich, für Rechteckbecken geeignet. Aufgrund des im Rechteckbecken herrschenden Konzentrationsgefälles ist der steuerungstechnische Aufwand bei in der bekannten Vorrichtung bzw. dem bekannten Verfahren relativ hoch.

Die Druckschrift JP 2003-181488 beschreibt ein Verfahren zum Reinigen von Abwässern, wobei ein Abwasser-Schlammgemisch aus mehreren Überlaufbecken 1-4 in einen Sedimentationsbehälter 5 geleitet wird. Der im Sedimentationsbehälter 5 abgeschiedene Schlamm wird indirekt oder direkt in die Überlaufbecken zurückgeführt. Sowohl in den Überlaufbecken 1-4, als auch im Sedimentationsbehälter 5 wird Schlamm abgeschieden. Der abgeschiedene Schlamm aus den Überlaufbecken 1-4 und dem Sedimentationsbehälter 5 wird in einem Sammelbehälter 6 zusammengeführt. Vor dem Entfernen des Schlamms aus dem Reinigungssystem wird der Schlamm in einem Entwässerungsaggregat 9 entwässert. Dadurch entsteht Überschussschlamm, der abgeführt wird. Damit wird das Ziel verfolgt, das Verfahren zur biologischen Behandlung zu verbessern, wobei auf die Zugabe von Chemikalien zur Entwässerung verzichtet werden kann. Der abgeführte Überschussschlamm ist also im Wesentlichen umweltverträglich bzw. bedarf keiner weiteren Nachbehandlung oder möglicherweise speziellen Entsorgung.

Der Erfindung liegt die Aufgabe zugrunde, eine Vorrichtung bzw. ein Verfahren zum Reinigen von Abwässern, insbesondere von Abwässern der Papierindustrie, anzugeben, bei denen der steuerungstechnische Aufwand verringert werden kann.

Hinsichtlich des Verfahrens wird diese Aufgabe erfindungsgemäß durch den Gegenstand des Anspruchs 1 und hinsichtlich der Vorrichtung durch den Gegenstand des Anspruchs 15 gelöst.

Im Unterschied zu dem Verfahren und der Vorrichtung, wie sie aus der DE 101 48 474 A1 bekannt sind, besteht der Kern der Erfindung darin, dass ein Teil des im Nachklärbecken abgeschiedenen Belebtschlamms dem Entwässerungsaggregat zugeführt werden kann. Dazu ist nach dem Anspruch 1 im Schritt c) vorgesehen, dass ein Teil des aus dem Nachklärbecken austretenden Abwasser-Belebtschlammgemisches in einem Entwässerungsaggregat entwässert wird. Außerdem ist bei dem erfindungsgemäßen Verfahren ferner vorgesehen, dass ein Teil des Belebtschlammes, der im Nachklärbecken und im Entwässerungsaggregat abgeschieden wird, in das Belebtschlammbecken rückgeführt wird.

Im Hinblick auf die Vorrichtung besteht der Kern der Erfindung darin, dass dem Entwässerungsaggregat im Nachklärbecken abgeschiedener Belebtschlamm zuführbar ist, und das Belebtschlammbecken eine Zuleitung für die Zufuhr von Rücklaufschlamm aus den Entwässerungsaggregat und eine weitere Zuleitung für Rücklaufschlamm aus dem Nachklärbecken aufweist.

Die Erfindung hat den Vorteil, dass diese besonders gut, aber nicht ausschließlich, in einem Rundbecken einsetzbar ist, wobei die Abwasserzufuhr über einen Trichter in der Mitte des Rundbeckens erfolgen kann, so dass ein größeres Konzentrationsgefälle weitgehend vermieden wird. Der steuerungstechnische Aufwand des erfindungsgemäßen Verfahrens bzw. der erfindungsgemäßen Vorrichtung ist entsprechend gering.

Eine weitere Vereinfachung der Steuerung kann dadurch erzielt werden, dass im Schritt b) das gesamte Abwasser-Belebtschlammgemisch aus dem Belebtschlammbecken dem Nachklärbecken zugeführt wird.

Alternativ kann im Schritt b) ein Teil des Abwasser-Belebtschlammgemisches aus dem Belebtschlammbecken dem Nachklärbecken zugeführt werden und ein weiterer Teil des Abwasser-Belebtschlammgemisches aus dem Belebtschlammbecken dem Entwässerungsaggregat zugeführt werden. Bei dieser Ausführungsform der Erfindung wird das aus der DE 101 48 474 A1 bekannte Verfahren mit dem erfindungsgemäßen Verfahren kombiniert, so dass die hydraulische Last bei einem vertretbaren steuerungstechnischen Aufwand verringert werden kann.

Als Entwässerungsaggregat können beispielsweise ein Dekanter, eine Sedimentieranlage oder eine Aufkonzentrierungsanlage eingesetzt werden. Gemäß einer vorteilhaften Ausführungsform der Erfindung weist das Entwässerungsaggregat einen Siebbandfilter auf. Das Entwässern in Stufe c) wird somit in einem Siebbandfilter als Entwässerungsaggregat ausgeführt. Der aus der Siebbandentwässerung abgeschiedene Belebtschlamm beinhaltet deutlich weniger Wasser als der herkömmliche Belebtschlamm aus dem Nachklärbecken. Der Feststoffgehalt in dem bei der Siebband-Entwässerung abgeschiedenen Belebtschlamm beträgt etwa das 10-fache desjenigen des Belebtschlammes aus dem Nachklärbecken. Dies bedeutet, daß der in die Belebungsstufe rückgeführte Belebtschlamm weniger Wasser enthält. Die hydraulische Last sinkt somit gegenüber einer herkömmlichen Nachklärung um die Differenz der entsprechenden Konzentrationen der Feststoffe im Abwasser-Belebtschlammgemisch. Hieraus folgt auch eine erhöhte Kontaktzeit des Abwassers mit der Biomasse in der Belebungsstufe. Somit ist bei gleichbleibender Dimension der Belebungsstufe eine Erhöhung der hydraulischen Last, d.h. des zugeführten Abwassers, möglich.

Bei einem Siebbandfilter handelt es sich um einen Siebtisch, über den ein Endlossiebband geführt wird. Hierzu sind zwei oder mehrere Umlenkrollen vorhanden. Das Endlosband besteht vorzugsweise aus einem Kunststoffgeflecht und weist eine Siebstruktur auf. Der Entwässerungsvorgang wird durch die Siebstruktur bewirkt. Das Abwasser-Belebtschlammgemisch wird auf den Siebtisch aufgebracht und entwässert durch das Sieb, wobei der eingedickte Schlamm in einen Trichter zur entsprechenden Weiterverarbeitung fällt. Zur Unterstützung der Abtragung des anfallenden Dickschlammes kann dieser beispielsweise von der Oberfläche des Siebbandes abgeschabt werden. Im Sieb hängengebliebene (und nicht entfernte) Masse kann entweder durch Spritzwasser, das aus dem Inneren des Siebbandtisches gespritzt wird, oder durch Druckluft aus dem Siebbandgeflecht entfernt werden. Der Einsatz von Druckluft ist insbesondere deshalb von Vorteil, da hierdurch ein Vedünnungseffekt für das Belebtschlammsystem vermieden wird, der bei Einsatz von Spritzwasser auftreten kann. Die für die Reinigung des Siebes eingesetzten Spritzdüsen sind vorzugsweise quer zum Sieb angebracht. Die Versorgung dieser Spritzdüsen kann entweder über eine externe Pumpe und/oder über einen Teilstrom des Klarfiltrates, der abgezogen und separat abgeführt wird, erfolgen. Die Weiterbeförderung des ausgefilterten Feststoffes erfolgt beispielsweise über eine Schnecke oder in freiem Gefälle, wobei das Siebreinigungswasser des Filters die notwendige Fließfähigkeit gewährleistet. Das Filtratwasser wird beispielsweise in einem geschlossenen Boden der Siebbandentwässerung gesammelt und über Rohrleitungen abgeführt.

Vorzugsweise wird das aus der Belebungsstufe austretende Abwasser-Belebtschlammgemisch dem Entwässerungsaggregat mit konstantem Volumenstrom zugeleitet. Bei einer entsprechenden Vorrichtung zum Reinigen von Abwässern ist demzufolge eine Einrichtung zum konstanten Fördern von Abwasser-Belebtschlammgemisch aus der Belebungsstufe zum Entwässerungsaggregat vorhanden. Dies bedeutet, daß das Entwässerungsaggregat kontinuierlich mit einem gleichbleibenden Strom an Abwasser-Belebtschlammgemisch aus der Belebungsstufe versorgt wird. In das Nachklärbecken wird somit nur der verbleibende Teil des aus der Belebungsstufe austretenden Abwasser-Belebtschlammgemisches eingeleitet. Schwankungen im Abwasserbereich können somit über das Nachklärbecken ausgeglichen werden.

Wenn im Rahmen der Erfindung von einem Entwässerungsaggregat bzw. einem Siebbandfilter gesprochen wird, so ist dies nicht beschränkend gemeint. So ist es möglich, den Ablauf aus der Belebungsstufe nicht in zwei, sondern in drei oder mehr Ströme aufzuteilen, wovon zwei oder mehr Ströme zwei oder mehreren Entwässerungsaggregaten, insbesondere Siebbandfiltern, zugeführt werden. Auf diese Weise kann eine Belebungsstufe zur Versorgung mehrerer Entwässerungsaggregate eingesetzt werden bzw. auch umgekehrt.

Zum Transport des Abwasser-Belebtschlammgemisches von der Belebungsstufe zum Entwässerungsaggregat wird vorzugsweise eine Kreiselpumpe eingesetzt. Die Kreiselpumpe hat den Vorteil einer stetigen Förderung, d.h., daß das Abwasser-Belebtschlammgemisch stetig dem Entwässerungsaggregat zugeführt wird. Ein weiterer Vorteil liegt in der kompakten Bauweise derartiger Pumpen, weswegen sie nur einen geringen Platzbedarf aufweisen.

Gemäß einer bevorzugten Ausführungsform der Erfindung umfaßt die Belebungsstufe mindestens einen, vorzugsweise etwa zwei bis fünf, Scheibentauchkörper. Das aerobe Klären erfolgt somit unter Einsatz eines oder mehrerer Scheibentauchkörper. Derartige Scheibentauchkörper, die auch als Tauchtropfkörper bezeichnet werden, sind im wesentlichen aus rotierenden Scheiben aus Kunststoff aufgebaut. Der Durchmesser derartiger Scheibentauchkörper liegt im allgemeinen zwischen 2 und 5 m, wobei beim Einsatz mehrerer Scheibentauchkörper diese zueinander vorzugsweise einen Abstand von je ca. 15 bis 20 mm aufweisen. Die Scheiben drehen sich auf einer gemeinsamen Welle, wobei sie etwa zur Hälfte in das zu reinigende Abwasser eintauchen. Der biologische Abbau der organischen Stoffe findet sowohl auf der Oberfläche der Scheibentauchkörper als auch in der Wasserphase statt, wo die Mikroorganismen wirksam werden. Gemäß einer alternativen Ausführungsform das Belebungsbecken als Scheibentauchkörper oder als belüftetes Becken ausgebildet sein.

Das gereinigte Abwasser aus dem Nachklärbecken kann, falls dies erforderlich ist, einem weiteren Filtersystem zugeführt werden. Hierzu ist bei der erfindungsgemäßen Vorrichtung dem Nachklärbecken ein Filtersystem nachgeschaltet. Das Filtersystem dient der weiteren Reinigung bzw. Filtrierung der biologisch gereinigten Abwässer. Je nach gewünschtem Reinheitsgrad können dabei verschiedene Filter zur Entfernung von Feinstschwebstoffen eingesetzt werden. Vorzugsweise werden die dabei abfiltrierten Stoffe zurück in den Zulauf zur Belebung geführt. Das durch das weitere Filtersystem gereinigte Wasser kann dann in den Vorfluter eingespeist oder in einem Klarwasserbecken zur Wiederverwendung gesammelt werden.

Das weitere Filtersystem enthält vorzugsweise einen Zweischichtfilter. Zweischichtfilter sind allgemein bekannt und enthalten zwei Schichten, jeweils eine Schicht aus einem feineren und eine Schicht aus einem gröberen Material, wobei die gröbere Schicht obenauf liegt. Der Durchlauf des zu reinigenden Wassers erfolgt, ebenso wie bei dem Siebbandfilter, von oben nach unten. In gegebenen Zeitabständen, deren Dauer von dem Verschmutzungsgrad sowie dem Durchsatz abhängt, findet eine übliche Rückspülung zur Filterreinigung statt. Danach stellt sich wieder die ursprüngliche Schichtstruktur ein. Eine derartige Filtrierung in einem Zweischichtfilter kann dann vorteilhaft oder notwendig sein, wenn die Ablaufwerte aus der Nachklärung und/oder der Siebband-Entwässerung nicht niedrig genug liegen, um den Strom unmittelbar dem Vorfluter zuführen zu können.

Gemäß einer vorteilhaften Ausführungsform der Erfindung ist das Filtersystem auch mit dem Entwässerungsaggregat über einen Ablauf desselben verbunden. Das gereinigte Abwasser aus dem Entwässerungsaggregat kann somit ganz oder teilweise dem weiteren Filtersystem zugeleitet werden. Auf diese Weise findet im Filtersystem sowohl eine Endfiltrierung des aus dem Nachklärbecken austretenden gereinigten Abwassers als auch des aus dem Entwässerungsaggregat austretenden gereinigten Abwassers statt.

Je nach Verschmutzungsgrad kann der Belebungsstufe eine mechanische Reinigungsstufe vorgeschaltet sein. Beispiele für eine solche mechanische Reinigungsstufe sind Rechen, Vorklärbecken oder Siebbandfilter. Die genannten Reinigungsmittel können entweder allein oder in Kombination eingesetzt werden. Wiederum empfiehlt sich beim Einsatz eines Siebbandfilters eine konstante Teilstrombehandlung, während im Vorklärbecken eine variable Teilstrombehandlung erfolgen kann. Zum Abfangen von stoßweise erhöhten Abwassermengen hat sich der Einsatz eines Pufferbeckens als vorteilhaft erwiesen. Bereits in der mechanischen Reinigungsstufe kann zur Verhinderung von Fäulnis z.B. ein Oxidationsmittel zugeführt werden.

Die Konsistenz des mit Hilfe des Entwässerungsaggregates bzw. Siebbandfilters eingedickten Schlammes kann durch die Zugabe von Flockungshilfsmitteln beeinflußt werden. Hierzu ist im Entwässerungsaggregat vorzugsweise eine Dosiereinrichtung zur Zugabe von Flockungshilfsmitteln zugeordnet. Diese Dosiereinrichtung kann beispielsweise in der Rohrleitung zwischen der Einrichtung zum Fördern des Belebtschlamm-Wassergemisches bzw. der Kreiselpumpe und dem Entwässerungsaggregat bzw. dem Siebfilter angeordnet sein. Die Dosiereinrichtung ist vorzugsweise so ausgebildet, daß eine Zwangsmischung der eingebrachten Flockungshilfsmittel mit dem Abwasser-Belebtschlammgemisch erfolgt. Dies kann beispielsweise durch tangentialen Ein- und Austritt des Schlamm-Wassergemisches erreicht werden. Bei der Dosiereinrichtung kann es sich beispielsweise um eine geeignete Pumpe handeln. Die Intensität der Einmischung kann des weiteren durch spezielle Einbauten beeinflußt werden, wie beispielsweise durch Wirbelstrecken, statische Mischer oder Rotor-/Statorsysteme.

Die Behandlung des Abwasser-Belebtschlammgemisches im Entwässerungsaggregat wird vorzugsweise automatisch geregelt. Hierzu ist eine geeignete Meßeinrichtung zum Messen des Feststoffgehaltes des gereinigten Abwassers dem Entwässerungsaggregat nachgeschaltet. Des weiteren ist eine Steuereinrichtung vorhanden, die die Dosiereinrichtung in Abhängigkeit des in der Meßeinrichtung gemessenen Feststoffgehaltes ansteuert. Ein Beispiel für eine Meßeinrichtung ist eine Trübungs-/Feststoffsonde. Als Alternative kann auch UV-Spektroskopie eingesetzt werden. Steigt der Feststoffgehalt im Filtratwasser an, dann wird ein Signal an die Steuereinrichtung abgegeben, wodurch die Förderleistung der Dosiereinrichtung, beispielsweise einer Flockungshilfsmittelpumpe, schrittweise erhöht wird. Die Steuerung kann beispielsweise so eingestellt werden, daß die Einstellung jeweils etwa 10 Minuten bestehen bleibt, nachdem die angestrebte Filtratqualität erreicht ist. Nach Ablauf der 10 Minuten wird die Dosiereinrichtung wieder schrittweise zurückgefahren. Andere Zeitabstände, beispielsweise in einem Bereich von 5 bis 15 Minuten, insbesondere in einem Bereich von 8 bis 12 Minuten, sind möglich.

Neben der Zugabe von Flockungshilfsmitteln kann die Konsistenz des eingedickten Schlammes auch durch die Siebgeschwindigkeit beeinflußt werden. Somit besteht eine weitere Möglichkeit der Regelung des erfindungsgemäßen Verfahrens. Eine weitere Option zur Sicherstellung des gewünschten Trübstoffgehaltes im Filtratwasser besteht in der Möglichkeit, die Zuführpumpe innerhalb ihrer Leistungsgrenzen in Verbindung mit der vorgenannten Dosiereinrichtung zu variieren. Wird in der Meßeinrichtung ein erhöhter Feststoffgehalt im Filtratwasser gemessen, so wird ein Signal an die Einrichtung zum Fördern bzw. die Kreiselpumpe abgegeben, welche daraufhin zurückgefahren wird. Die Zufuhrmenge an Abwasser-Belebtschlammgemisch wird auf diese Weise schrittweise reduziert. Diese Art der Regelung kann allein oder in Kombination mit dem erstgenannten Regelmechanismus eingesetzt werden.

Eine Möglichkeit der kombinierten Regelung liegt beispielsweise darin, bei zu hohem Trübstoffgehalt im gereinigten Abwasser zunächst die Förderleistung der Flockungsmittel-Dosiereinrichtung zu erhöhen. Bei Erreichen der optimierten Förderleistung und weiterhin zu hohem Trübstoffgehalt im gereinigten Abwasser erfolgt eine Reduzierung der Flockungsmittelzufuhr zum Entwässerungsaggregat. Die Regelung kann so ausgelegt werden, daß bei Erreichen von 40% bis 60%, insbesondere von 50% der maximalen Förderleistung der Einrichtung zum Fördern bei gleichzeitig optimiertem Flockungsmitteleinsatz der Entwässerungsvorgang nach 10 bis 30 Minuten, insbesondere nach 20 Minuten unterbrochen wird, so daß die Anlage von Hand neu eingestellt werden kann. Andere Grenzwerte im Hinblick auf die Förderleistung bzw. andere Zeitabstände sind möglich.

Vorzugsweise enthält der im Nachklärbecken abgeschiedene Belebtschlamm eine Feststoffkonzentration von etwa 2 g/l bis etwa 10 g/l, insbesondere von etwa 2,5 g/l bis etwa 7 g/l und weiter insbesondere etwa 4 g/l bis etwa 5,5 g/l. Höhere Feststoffkonzentrationen im Belebtschlamm lassen sich mittels eines Nachklärbeckens nur schwer erreichen. Zudem treten bei Unter- bzw. Überschreitung dieser Werte Nachteile auf, die zur Beeinträchtigung des Systems führen.

Demgegenüber enthält der im Entwässerungsaggregat abgeschiedene Belebtschlamm Feststoffe in einer Konzentration von etwa 30 g/l bis 80 g/l, insbesondere etwa 35 g/l bis 55 g/l. Somit ist die Feststoffkonzentration im Belebtschlamm bei dem Entwässerungsaggregat, beispielsweise der Siebbandpresse, um etwa das 10-fache gegenüber derjenigen aus dem Nachklärbecken erhöht.

Die Erfindung wird nachstehend näher anhand eines Ausführungsbeispiels und mit Bezug auf die beigefügte schematische Zeichnung beschrieben.

In der Zeichnung zeigen:
- Fig. 1: das Flussdiagramm einer Abwasser-Reinigungsanlage für die Papierindustrie nach dem Stand der Technik;
- Fig. 2: einen Erweiterungsausbau einer Anlage nach Fig. 1, welcher zur Erhöhung der Kapazität herkömmlicherweise eingesetzt wird;
- Fig. 3: das Flussdiagramm einer weiterer Abwasser-Reinigungsanlage nach dem Stand der Technik;
- Fig. 4: die Abwasser-Reinigungsanlage nach Fig. 1 unter Berücksichtigung der biologischen Belastung;
- Fig.5: die Abwasser-Reinigungsanlage nach Fig. 3 unter Einbeziehung der biologischen Belastung und
- Fig. 6: das Flussdiagramm eines Ausführungsbeispiels einer erfindungsgemäßen Vorrichtung bzw. Verfahrens.

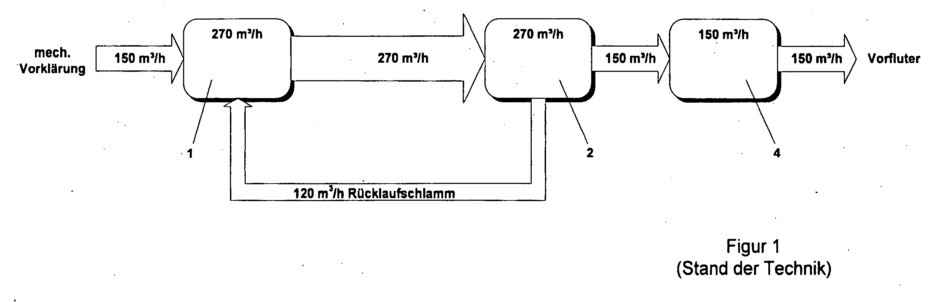

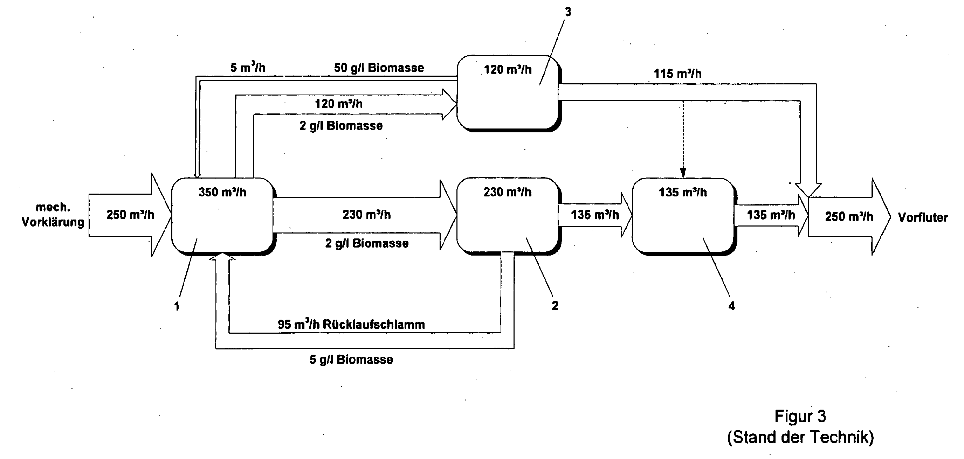

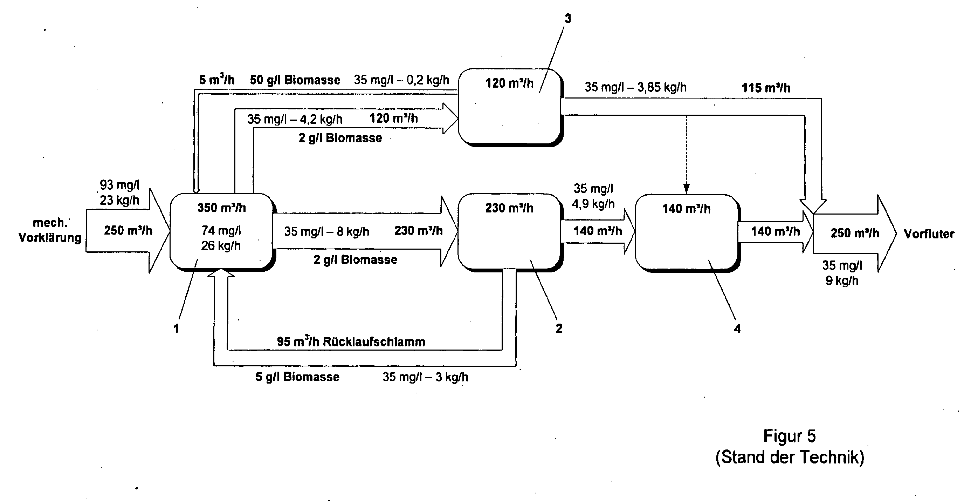

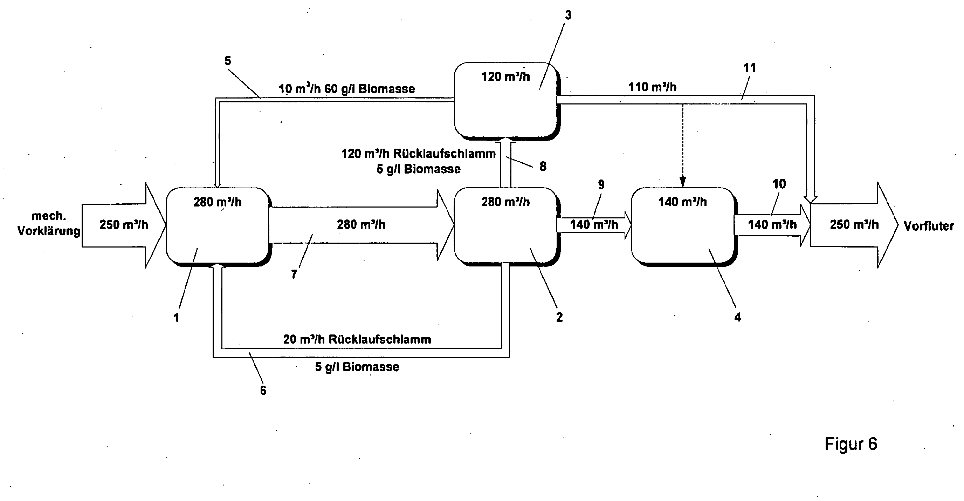

Zum besseren Hintergrundverständnis der Erfindung wird die bekannte Anlage nach den Fig. 1, 2 und 4 sowie die bekannte verbesserte Anlage nach den Fig. 3 und 5 näher erläutert. Auf die erfindungsgemäße Anlage nach Fig. 6 bzw. das erfindungsgemäße Verfahren wird zurückgekommen. Bereits an dieser Stelle wird darauf hingewiesen, dass die in den Fig. 1 bis 5 und der zugehörigen Beschreibung offenbarte Vorrichtung bzw. das offenbarte Verfahren mit dem erfindungsgemäßen Verfahren bzw. der erfindungsgemäßen Vorrichtung kombiniert werden können.

In Fig. 1 ist mit dem Bezugszeichen 1 allgemein eine Belebungsstufe bzw. ein Belebtschlammbecken gekennzeichnet. Im Falle eines vorgeschalteten Tropfkörpers erfolgt dessen Beschickung vorzugsweise mit drehzahlgeregelten Pumpen. Die Regelung der Beschickung des Tropfkörpers erfolgt, wenn dem Tropfkörper eine zweite Biostufe nachgeschaltet ist, vorzugsweise in Abhängigkeit des Sauerstoffgehaltes der zweiten Biostufe. Falls die biologische Abbaustufe Scheibentauchkörper enthält, so handelt es sich hierbei vorzugsweise um mehrere, beispielsweise vier, in Reihe geschaltete Scheibentauchkörper mit drehzahlgeregeltem Antrieb. Vorzugsweise finden jeweils nach dem zweiten und vierten Scheibentauchkörper Sauerstoffmessungen statt, die zur Regelung der Drehzahl der Scheibentauchkörper eingesetzt werden. Wie dies üblich ist, findet, vorzugsweise in dem Zulauf zur Belebungsstufe, eine Zudosierung von Nährsalzlösung statt, wenn sich dieses als notwendig erweisen sollte.

Der Überlauf aus der Belebungsstufe 1 tritt nach dem Stand der Technik vollständig in ein Nachklärbecken 2 ein. Im Nachklärbecken 2 findet die Trennung des Belebtschlamm-Abwassergemisches in klares, weitgehend feststofffreies Wasser und Belebtschlamm statt. Des weiteren erfolgt eine Rückhaltung, Eindickung und Speicherung des Belebtschlammes. Übliche Ausführungsformen eines Nachklärbeckens sind Rechteck- bzw. Rundbecken. Der abgesetzte Belebtschlamm wird über eine Rückleitung wieder der Belebungsstufe zugeführt. Hierzu können beispielsweise Schildräumer oder Saugräumer, welche letzteren nach dem Heber-Prinzip arbeiten, eingesetzt werden. Die Schlammrückführung kann kontinuierlich oder in Intervallen erfolgen.

Das aus dem Nachklärbecken austretende filtrierte Wasser wird in diesem Ausführungsbeispiel einer optionalen weiteren Filtrierungsstufe, beispielsweise einem Zweischichtfilter, zugeführt, der hier mit dem Bezugszeichen 4 gekennzeichnet ist. Hier können auch feinste Feststoffteilchen sowie Bioschlamm-Teilchenaggregate bis zu einer Größe von etwa 1 bis 5 Millimeter ausgefiltert werden. Das aus diesem Filter austretende Reinwasser kann anschließend entweder in einem Klarwasserbecken gesammelt oder direkt in den Vorfluter eingespeist werden.

Ein Beispiel für die mögliche Auslegung der in Fig. 1 gezeigten Anlage (gem. Stand der Technik) wird im folgenden gegeben:

| | | | |
|---|---|---|---|
| Belebungsstufe: | Abwasserzulauf: | 150 m³/h | |
| | Volumen: | 350 m³ | |
| | Verweilzeit: | 2,33 h | (Quot. aus Vol. 350 m³ und Abwasserzulauf 150 m³/h =2,33 h) |
| | | | |
| Nachklärbecken: | Klärbeckenoberfläche: | 198 m² | |
| | Klärbeckenvolumen: | 653 m³ | |
| | Klärbeckenoberflächenbeschickung: | 0,76 m/h | (Quotient aus Abwasserzulauf 150 m³/h und Klärbeckenoberfläche 198 m² = 0,76 m/h) |
| | Verweilzeit: | 4,35h | (Quot. aus Klärbeckenvol. 653 m³ und Abwass.zulauf 150 m³/h |

Die vorstehenden Angaben wurden theoretisch hergeleitet. Berücksichtigt man die tatsächlichen Betriebsverhältnisse, d.h. das Rückführen des Belebtschlammes aus dem Nachklärbecken 2 in die Belebungsstufe 1, so ergeben sich folgende Verhältnisse:

| | | |
|---|---|---|
| Belebungsstrecke: | Abwasserzulauf inkl. Rücklauf: | 270 m³/h |
| | Volumen: | 350 m³ |
| | tatsächliche Verweilzeit: | 1,30 h |
| | | |
| Nachklärbecken: | Klärbeckenoberfläche: | 198 m² |
| | Klärbeckenvolumen: | 653 m³ |
| | Rücklaufschlamm: | 120 m³/h |
| | tatsächliche Oberflächenbeschickung: | 1,36 m/h |
| | tatsächliche Verweilzeit: | 2,42 h |

In diesem Vergleich wird deutlich, daß wesentliche hydraulische Anlagenkenngrößen in der allgemein üblichen Anlagendimensionierung vernachlässigt werden, wenn der rückgeführte Belebtschlamm nicht berücksichtigt wird.

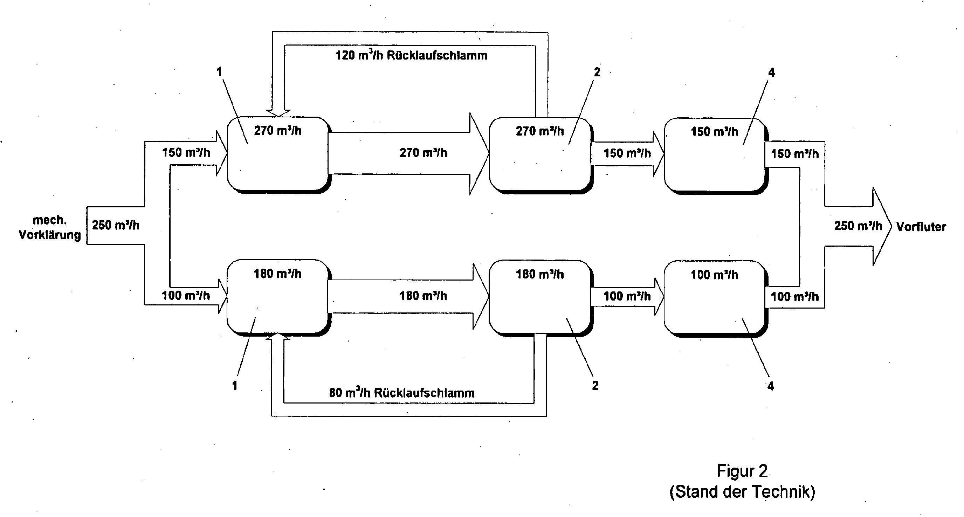

Fig. 2 zeigt den nach dem Stand der Technik üblichen Ausbau der Anlage von Fig. 1, wenn eine zusätzliche Abwassermenge zu verarbeiten ist. In Fig. 2 wurden der Ausführungsform von Fig. 1 entsprechenden Elementen die gleichen Bezugszeichen zugeordnet. Ist beispielsweise eine erhöhte Zulaufmenge von 100 m³/h zu bewältigen, müßte unter Beibehaltung der allgemein üblichen Randbedingungen und vorstehend genannten Anlagenkenngrößen ein weiteres Nachklärbecken gebaut werden. Dies hätte jedoch zur Folge, daß die effektive Verweilzeit bzw. Kontaktzeit bei gleicher Größe der Belebungsstufe um ca. 50% abnimmt. Aufgrund der dann geringeren Kontaktzeit wäre zusätzlich eine Erweiterung der Belebungsstufe zwingend erforderlich, wie dies nachfolgend näher erläutert wird. Eine Erweiterung der Belebungsstufe macht generell jedoch nur dann Sinn, wenn diese biologisch überlastet ist. Nimmt jedoch nur die Abwassermenge zu, wobei der Gehalt an Substrat im Abwasser geringer wird, sollte eher die hydraulische Last der Anlage verringert werden.

Für die in Fig. 2 gezeigte Anlage ergeben sich bei einer um 100 m³/h erhöhten Zulaufmenge folgende Daten:

| | | |
|---|---|---|
| Belebungsstrecke: | Abwasserzulauf: | 250 m³/h |
| | | (Summe aus 150 + 100 m³/h) |
| | Abwasserrücklaufschlamm: | 200 m³/h |
| | | (Summe aus 120 + 80 m³/h) |
| | Volumen Belebungsbecken: | 350 m³ |
| | tatsächliche Verweilzeit: | 0,78 h |
| | | (Quotient aus Beleb.-beckenvol. 350 m³ und Summe aus Abwasserzuläufen zum Nachklärbecken: 270 + 180 m³/h = 450 m³/h) |

Um die im Zusammenhang mit Fig. 1 errechnete Verweilzeit von 1,30 h zu erreichen, muß folglich die Belebungsstufe um 67% erweitert werden (von 0,78 h auf 1,30 h).

Damit ergeben sich folgende Verhältnisse im Nachklärbecken:

| | | | |
|---|---|---|---|
| Nachklärbecken: | Klärbeckenoberfläche: | 1 x 198 m² plus 1 x 133 m² | |
| | Klärbeckenvolumen: | 1 x 653 m³ plus 1 x 436 m³ | |
| | Abwassermenge: | 250 m³/h | |
| | Rücklaufschlamm: | 200 m³/h | |
| | tatsächliche | | |
| | Oberflächenbeschickung: | 1,36 m/h | (Quotient aus Summe von Abwasserzulauf 250 m³/h sowie Rücklaufschlamm 120+80 m³/h und Summe der Klärbeckenoberflächen 198 + 133 = 331 m²) |
| | tatsächliche Verweilzeit: | 2,42 h | (Quot. aus Klärbeckenvol. 653 m³ und Abwasserzulauf inkl. Rücklauf 270 m³/h) |

Ein derartiger Ausbau einer bestehenden Anlage ist mit großem Zeitaufwand verbunden. Zudem tritt ein großer finanzieller Investitionsbedarf auf. Durch die notwendige Erweiterung der Belebungsstufe um nahezu 70% entsteht des weiteren ein unverhältnismäßig hoher Flächenbedarf. Die Flexibilität der Anlage im Hinblick auf die Abwasserinhaltsstoffe (Konzentration der Abwasserinhaltsstoffe) ist bei einem derartigen konventionellen Ausbau eingeschränkt. Mit anderen Worten, kann sich, wenn das Abwasser "dünner" bzw. "dicker" wird, eine erhebliche Beeinträchtigung der Gesamtfunktionalität der Anlage ergeben.

In Fig. 3 ist eine aus der DE 101 48 474 A1 bekannte Alternative zu dem gezeigten herkömmlichen Ausbau dargestellt. Das Verfahren weist die folgenden Verfahrensschritte auf: a) aerobes Klären des Abwassers durch Belebtschlamm in einer Belebungsstufe; b) Nachklären eines Teils des aus der Belebungsstufe austretenden Abwasser-Belebtschlammgemisches in einem Nachklärbecken; c) Entwässern eines anderen Teils des aus der Belebungsstufe austretenden Abwasser-Belebtschlammgemisches in einem Entwässerungsaggregat; d) Rückführen zumindest eines Teils des in den Schritten b) und c) abgeschiedenen Belebtschlammes in das Belebtschlammbecken.

Eine entsprechende Vorrichtung weist eine Belebungsstufe zur aeroben Klärung des Abwassers, ein Nachklärbecken zur Fest-/Flüssigtrennung sowie ein Entwässerungsaggregat zur Schlammentwässerung auf, wobei sowohl das Nachklärbecken als auch das Entwässerungsaggregat über je mindestens zwei Rohrleitungssysteme mit der Belebungsstufe in Verbindung stehen. Jeweils eine Rohrleitung führt dabei vom Ablauf der Belebungsstufe zum Nachklärbecken bzw. dem Entwässerungsaggregat und dient der Zuleitung des Abwasser-Belebtschlammgemisches. Jeweils eine weitere Rohrleitung dient der Rückführung des im Nachklärbecken bzw. dem Entwässerungsaggregat eingedickten Belebtschlamms in die Belebungsstufe.

Durch Rückführung des Schlammes aus dem Entwässerungsaggregat bzw. dem Nachklärbecken wird die für das Belebungssystem erforderliche Biomasse wieder bereitgestellt, so daß das aerobe System in der Belebung stabilisiert wird. Durch die Rückführung des Schlammes wird insbesondere eine Beeinträchtigung der Abwasserreinigung durch Bioschlammverluste vermieden oder minimiert.

Die erste Stufe, nämlich das aerobe Klären des Abwassers in einer Belebungsstufe mittels Belebtschlamm entspricht derjenigen des Standes der Technik nach Fig. 1. Anders als nach dem Stand der Technik nach Fig. 1 wird jedoch nicht das gesamte aus der Belebungsstufe ablaufende Bioschlamm-Wassergemisch dem Nachklärbecken zugeführt, sondern nur ein Teil davon. Der andere Teil wird in einem parallelen Verfahrensschritt in einem Entwässerungsaggregat entwässert. Dabei wird der entstehende eingedickte Bioschlamm sowohl aus dem Nachklärbecken als auch aus dem Entwässerungsaggregat in die Belebungsstufe zurückgeführt. Das gereinigte Abwasser, welches aus dem Nachklärbecken bzw. dem Entwässerungsaggregat austritt, kann anschließend beispielsweise direkt oder über eine Filterreinigungsstufe in einen Vorfluter geleitet werden. Durch das Verfahren nach Fig. 3 und 5 wird die hydraulische Last der Bei lebungsstufe und auch der Nachklärung auf ein Minimum reduziert.

Insbesondere wird im Anschluß an eine Belebungsstufe 1 der austretende Abwasserstrom in zwei Teilströme aufgeteilt, wobei der erste Teilstrom, wie bisher üblich, einem Nachklärbecken 2 zugeleitet wird, wohingegen der zweite Teilstrom einem Entwässerungsaggregat 3, beispielsweise einem Siebbandfilter, zugeführt wird. Sowohl aus dem Nachklärbecken 2 als auch aus dem Entwässerungsaggregat 3 wird der abgetrennte Belebtschlamm wieder in die Belebungsstufe 1 zurückgeführt. Dem Nachklärbecken ist ein zusätzliches Filtersystem 4, beispielsweise ein Zweischichtfilter, nachgeschaltet, der aus dem Ablauf des Nachklärbeckens 2 und, wahlweise, auch aus dem Ablauf des Entwässerungsaggregats 3 gespeist wird (strichlierte Linie). Das aus dem Entwässerungsaggregat 3 austretende Wasser kann jedoch bei entsprechender Sauberkeit auch die Nachfiltrierungsstufe 4 auslassen und direkt mit dem aus der Filteranlage 4 austretenden gereinigten Abwasser zusammengeführt und anschließend in den Vorfluter eingespeist werden.

Für einen entsprechenden Abwasserzulauf von 250 m³/h (dies entspricht den Verhältnissen bei der Ausführungsform nach dem Stand der Technik von Fig. 2) ergeben sich bei der erfindungsgemäßen Ausführungsform folgende Kennwerte:

| | | | |
|---|---|---|---|
| Belebungsstufe: | Abwasserzulauf: | 250 m³/h | |
| | Rücklaufschlamm: | 95 m³/h | |
| | Rücklauf aus Entwässerungsaggregat: | 5 m³/h | |
| | Volumen: | 350 m³ | |
| | tatsächliche Verweilzeit: | 1,00 h | (Quotient aus Belebungsbeckenvolumen 350 m³ und Summe aus Abwasserzulauf 250 m³ und Rücklaufschl. 95 + 5 m³/h). |

Um zu einer der ursprünglichen Ausgangslage entsprechenden tatsächlichen Verweilzeit zu gelangen, muß die Belebungsstufe hier um rund 30 % erweitert werden. Damit ergeben sich folgende Verhältnisse für das Nachklärbecken:

| | | | |
|---|---|---|---|
| Nachklärbecken: | Klärbeckenoberfläche: | 198 m² | |
| | Klärbeckenvolumen: | 653 m³ | |
| | Rücklaufschlamm inkl. Entwässerungsaggregat: | 95 m³/h | (Summe aus 90 + 5 m³/h) |
| | Abwassermenge (Einlauf in Nachklärbecken): | 230 m³/h | |
| | tatsächl. Oberflächenbeschickung: | 1,16 m/h | (Quot. aus Abwasser 230 m³ und Klärbeckenoberfl. 198 m²), |
| | tatsächliche Verweilzeit: | 2,61 h | (Quot. aus Klärbeckenvol. 653 m³ und Abwassermenge 250 m³/h). |

Es ist auf diese Weise keine Erweiterung des Nachklärungsbeckens, bezogen auf die Verweilzeit unter tatsächlichen Betriebsverhältnissen notwendig.

Aus dem gezeigten Ausführungsbeispiel zeigt sich, daß zur Bewältigung einer zusätzlichen Menge von 100 m³/h zu reinigendem Abwasser konventionell eine Erweiterung der Nachklärung um ein weiteres Nachklärbecken erforderlich ist. Die Nachklärung ist bei dem in Zusammenhang mit Fig. 2 gezeigten herkömmlichen Ausführungsbeispiel unter Beibehaltung der wesentlichen Anlagenkenngrößen um ca. 70% zu erweitern. Demgegenüber muß die Belebungsstufe unter Einsatz der erfindungsgemäßen Vorrichtung nur um rund 30% erweitert werden. Dies führt in der Praxis zu einer Kostenersparnis von etwa 80%. Zudem sinkt die hydraulische Last gegenüber einer herkömmlichen Nachklärung, wie sie im Zusammenhang mit Fig. 2 gezeigt ist, um über 90%. Ein zusätzlicher wirtschaftlicher Vorteil liegt darin, daß beim konventionellen Aufbau aufgrund der notwendigen starken Erweiterung der Belebungsstufe ein erhöhter Flächenbedarf auftritt. Im Gegensatz hierzu ist bei der Vorrichtung gemäß der vorliegenden Erfindung nur eine weitaus geringere zusätzliche Fläche für die Belebungsstufe notwendig. Wie dies aus den Fig. 1 und 3 zu erkennen ist, sind für die Umrüstung einer bestehenden Anlage zu einer erfindungsgemäßen Vorrichtung nur wenige zusätzliche Elemente notwendig, weswegen der Ausbau zeitnahe erfolgen kann.

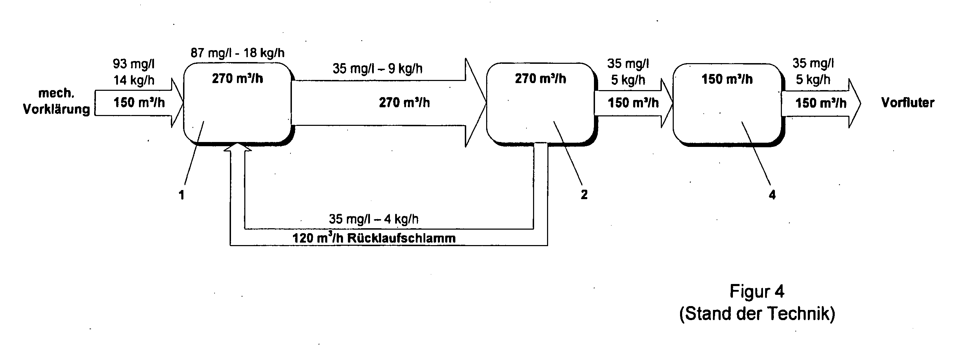

Figur 4 zeigt die Verhältnisse der biologischen Belastung bei der Abwasser-Reinigungsanlage nach dem Stand der Technik, wie sie in Figur 1 dargestellt ist. Die gezeigte Anlage ist für eine biologische Belastung von 560 kg CSB pro Tag, entsprechend 23 kg/h ausgelegt. Dabei ist unter der CSB-Belastung der chemische Sauerstoffbedarf zu verstehen, der eine Kenngröße zur summarischen Erfassung der oxidierbaren Inhaltsstoffe eines Abwassers darstellt. Das genormte Verfahren zur Ermittlung dieser Kenngröße ist dem Fachmann auf dem Gebiet der Abwassertechnik bekannt und soll hier deshalb nicht näher erläutert werden. Im Zulauf zur Belebung beträgt die CSB-Belastung 93 mg/l, was bei einem Zulauf von 150 m³/h einer Belastung von 14 kg/h entspricht. Der Rücklaufschlamm enthält eine Belastung von 35 mg/l, was bei der Rücklaufmenge von 120 m³/h einer Belastung von 4 kg/h entspricht. Hieraus ergibt sich für die Belebungsstufe eine biologische Belastung von 67 mg/l, was bei dem Gesamtzulauf von 270 m³/h einer Belastung von 18 kg/h entspricht, wobei das aus der Nachklärung austretende gereinigte Abwasser eine Belastung von 35 mg/l aufweist, was bei einer Wassermenge von 150 m³/h einer Belastung von 5,3 kg/h entspricht.

In Figur 5 sind die Verhältnisse in Bezug auf die biologische Belastung bei einer Anlage dargestellt, wie sie in Figur 3 gezeigt ist. Die biologische Belastung im Zulauf zur Belebungsstufe beträgt ebenfalls 93 mg/l, was aufgrund der erhöhten Zulaufmenge von insgesamt 250 m³/h hier einer biologischen Belastung von 23 kg/h entspricht. Im Rücklaufschlamm ist eine CSB-Belastung von 35 mg/l zu verzeichnen, was bei einer beförderten Rücklaufschlammmenge von 95 m³/h einer Belastung von 3 kg/h entspricht. Hinzu kommt in diesem Fall noch die biologische Belastung des Rücklaufschlammes aus der Siebbandentwässerung von 35 mg/l, was bei einer Menge von 5 m³/h einer Belastung von 0,4 kg/h entspricht.

Hieraus ergeben sich folgende Werte für die biologischen Belastungen der einzelnen Stufen:

| | |
|---|---|
| Belebungsstufe: | 74 mg/l; das entspricht bei einer gesamten Abwassermenge von 350 m³/h einem Wert von 26 kg/h; |
| Nachklärung: | 35 mg/l; dies entspricht bei einem Abwasserdurchsatz von 230 m³/h einer Belastung von 5 kg/h; |
| Siebbandentwässerung: | 35 mg/l; dies entspricht bei einem Gesamtdurchsatz von 120 m³/h einer Belastung von 4 kg/h; |
| Vorfluter: | 35 mg/l; was bei einer Wassermenge von 250 m³/h einer Belastung von 8,8 kg/h entspricht. |

Diese Beispiele zeigen, dass es möglich ist, bei gleichbleibender Zulaufkonzentration (CSB-Belastung im Abwasser) die erfindungsgemäß erweiterte Abwasserreinigungsanlage bezüglich ihrer biologischen Kapazität optimal auszunutzen. Aufgrund der erhöhten hydraulischen Leistungsfähigkeit ist eine optimale Substratbesorgung möglich, ohne dass eine gezielte Erhöhung der Zulaufkonzentration (Zugabe von z. B. Stärke) erfolgen muss.

Das Flussdiagramm einer erfindungsgemäßen Vorrichtung bzw. eines erfindungsgemäßen Verfahrens ist in Fig. 6 dargestellt.

Die Anlage nach Fig. 6 umfaßt ein Belebtschlammbecken 1, ein Nachklärbecken 2, ein Entwässerungsaggregat 3 sowie ein Filtersystem 4. Wesentlich bei dieser Anlage ist, dass das Nachklärbecken 2 und das Entwässerungsaggregat 3 hydraulisch miteinander verbunden sind, so dass Belebtschlamm bzw. Rücklaufschlamm, der im Nachklärbecken 2 abgeschieden wird, dem Entwässerungsaggregat 3 zugeführt werden kann. In diesem Sinne ist das Entwässerungsaggregat 3 dem Nachklärbecken 2, bzw. allgemein eine Entwässerungsstufe der Nachklärstufe nachgeschaltet. Das Entwässerungsaggregat kann beispielsweise ein Gerät mit der Bezeichnung Turbodrain TD3 sein. Im Übrigen können die bereits im Zusammenhang mit der bekannten Vorrichtung bzw. dem bekannten Verfahren nach den Fig. 1 bis 5 beschriebenen Ausgestaltungen des Belebtschlammbeckens 1, des Nachklärbeckens 2, des Entwässerungsaggregats 3 und des Filtersystems 4 bei der erfindungsgemäßen Vorrichtung bzw. dem erfindungsgemäßen Verfahren verwendet werden.

Die anhand des Flussdiagramms nach Fig. 6 schematisch dargestellte Anlage ist im Einzelnen wie folgt aufgebaut bzw. wird wie folgt beschrieben. Dem Belebtschlammbecken 1 wird aus der mechanischen Vorklärung ein Abwasserstrom zugeführt. Das Belebtschlammbecken 1 umfaßt des weiteren eine Zuleitung 5 für die Zufuhr von Rücklaufschlamm aus dem Entwässerungsaggregat 3 sowie eine weitere Zuleitung 6 für Rücklaufschlamm, der im Nachklärbecken 2 abgeschieden wird. Das Belebtschlammbecken 1 umfaßt ferner eine Ablaufleitung 7, die das Belebtschlammbecken 1 mit dem Nachklärbecken 2 verbindet.

Das Nachklärbecken 2 ist vorzugsweise als Rundbecken ausgeführt, wobei die Abwasserzufuhr durch die Leitung 7 in das Nachklärbecken 2 durch einen mittig im Nachklärbecken 2 angeordneten Trichter erfolgt.

Das Nachklärbecken 2 umfaßt eine Ablaufleitung 8, die das Nachklärbecken 2 mit dem Entwässerungsaggregat 3 verbindet, so dass Rücklaufschlamm vom Nachklärbecken 2 dem Entwässerungsaggregat 3 durch die Ablaufleitung 8 zugeführt werden kann. Das Nachklärbecken 2 ist mit einer weiteren Leitung, nämlich der zum Belebtschlammbecken 1 führenden Zulaufleitung 6 verbunden, so dass Rücklaufschlamm aus dem Nachklärbecken 2 dem Belebtschlammbecken 1 zugeführt werden kann.

Eine weitere Ablaufleitung 9 verbindet das Nachklärbecken 2 mit dem Filtersystem 4.

Es ist klar, dass die Ablaufleitungen 6, 8 und 9 des Nachklärbeckens 2 für die jeweils nachgeordneten Becken 1, 4 bzw. das Aggregat 3 die jeweiligen Zuleitungen darstellen.

Das Filtersystem 4, das einen Zweischichtfilter umfassen kann, ist durch die Leitung 10 mit einem Vorfluter verbunden.

Das Entwässerungsaggregat 3 umfaßt einen Zulauf, nämlich die Ablaufleitung 8 des Nachklärbeckens 2 sowie zwei Abläufe, nämlich die Leitung 5, die zum Belebtschlammbecken 1 führt sowie eine weitere Rohrleitung 11, durch die das gereinigte Wasser aus dem Entwässerungsaggregat 3 in die Rohrleitung 10 eingeleitet wird, die zum Vorfluter führt.

Die vorstehend beschriebene Anlage sowie das vorstehend beschriebene Verfahren ermöglicht die Rückfuhr von Belebtschlamm sowohl aus dem Entwässerungsaggregat 3 (durch die Rohrleitung 5) als auch aus dem Nachklärbecken 2 (durch die Rohrleitung 6) zum Belebtschlammbecken 1. Außerdem besteht zwischen dem Nachklärbecken 2 und dem Entwässerungsaggregat 3 eine hydraulische Verbindung, so dass ein Teil des im Nachklärbecken 2 abgeschiedenen Belebtschlammes über das Entwässerungsaggregat 3 dem Belebtschlammbecken 1 zugeführt wird, wobei dem Belebtschlamm im Entwässerungsaggregat 2 Flüssigkeit entzogen wird, die als gereinigtes Abwasser durch die Rohrleitung 11 dem Vorfluter zugeführt wird.

Die Volumenströme sowie die Konzentrationen der Biomasse, mit denen die erfindungsgemäße Anlage nach Fig. 6 beispielsweise betrieben werden kann, sind in Fig. 6 angegeben.

Ferner ist es auch möglich, die Vorrichtung nach Fig. 6 mit der Vorrichtung nach Fig. 5 zu kombinieren. Dies bedeutet, dass bei der Vorrichtung nach Fig. 5 zwischen dem Nachklärbecken 2 und dem Entwässerungsaggregat 3 eine verbindende Rohrleitung vorgesehen ist, so dass Belebtschlamm aus dem Nachklärbecken 2 dem Entwässerungsaggregat 3 zugeführt werden kann. Das Entwässerungsaggregat 3 würde somit über zwei Zuleitungen einmal vom Nachklärbecken 2 sowie vom Belebtschlammbecken 1 mit dem Abwasser-Belebtschlammgemisch versorgt werden.

## Patentansprüche

1. Verfahren zum Reinigen von Abwässern, insbesondere von Abwässern der Papierindustrie, aufweisend die folgenden Verfahrensschritte:
a) aerobes Klären des Abwassers durch Belebtschlamm in einem Belebtschlammbecken (1);
b) Nachklären zumindest eines Teils des aus dem Belebtschlammbecken (1) austretenden Abwasser-Belebtschlammgemisches in einem Nachklärbecken (2);
c) Entwässern eines Teils des im Nachklärbecken (2) abgeschiedenen Belebtschlamms in einem Entwässerungsaggregat (3);
d) Rückführen zumindest eines Teils des in den Schritten b) und c) abgeschiedenen Belebtschlammes in das Belebtschlammbecken (1).

2. Verfahren nach Anspruch 1, **dadurch gekennzeichnet, dass** im Schritt b) das gesamte Abwasser-Belebtschlammgemisch aus dem Belebtschlammbecken (1) dem Nachklärbecken (2) zugeführt wird.

3. Verfahren nach Anspruch 1, **dadurch gekennzeichnet, dass** im Schritt b) ein Teil des Abwasser-Belebtschlammgemisches aus dem Belebtschlammbecken (1) dem Nachklärbecken (2) zugeführt wird und ein weiterer Teil des Abwasser-Belebtschlammgemisches aus dem Belebtschlammbecken (1) dem Entwässerungsaggregat (3) zugeführt wird.

4. Verfahren nach einem der Ansprüche 1 bis 3, **dadurch gekennzeichnet, dass** das gereinigte Abwasser aus dem Nachklärbecken (2) einem Filtersystem (4) zugeführt wird.

5. Verfahren nach einem der Ansprüche 1 bis 4, **dadurch gekennzeichnet, dass** das gereinigte Abwasser aus dem Entwässerungsaggregat (3) zumindest teilweise dem Filtersystem (4) zugeführt wird.

6. Verfahren nach Anspruch 4 oder 5, **dadurch gekennzeichnet, dass** das gereinigte Abwasser aus dem Nachklärbecken (2) einem Zweischichtfilter als Filtersystem (4) zugeleitet wird.

7. Verfahren nach einem der Ansprüche 1 bis 6, **dadurch gekennzeichnet, dass** das Entwässern nach Schritt c) mit einem Siebbandfilter als Entwässerungsaggregat (3) stattfindet.

8. Verfahren nach einem der Ansprüche 3 bis 7, **dadurch gekennzeichnet, dass** das aus dem Belebtschlammbecken (1) und/oder dem Nachklärbecken (2) austretende Abwasser-Belebtschlammgemisch dem Entwässerungsaggregat (3) mit konstantem Volumenstrom zugeleitet wird.

9. Verfahren nach einem der Ansprüche 1 bis 8, **dadurch gekennzeichnet, dass** das aerobe Klären nach Schritt a) durch wenigstens einen Scheibentauchkörper erfolgt.

10. Verfahren nach einem der Ansprüche 1 bis 9, **dadurch gekennzeichnet, dass** der in Schritt b) abgeschiedene Belebtschlamm in einer Konzentration von etwa 2 g/l bis etwa 10 g/l in das Belebtschlammbecken (1) rückgeführt wird.

11. Verfahren nach Anspruch 10, **dadurch gekennzeichnet, dass** der in Schritt b) abgeschiedene Belebtschlamm in einer Konzentration von etwa 2,5 g/l bis etwa 7 g/l, insbesondere von etwa 4 g/l bis etwa 5,5 g/l in das Belebtschlammbecken (1) rückgeführt wird.

12. Verfahren nach einem der Ansprüche 1 bis 11, **dadurch gekennzeichnet, dass** der in Schritt c) abgeschiedene Belebtschlamm in einer Konzentration von etwa 30 g/l bis etwa 80 g/l in das Belebtschlammbecken (1) rückgeführt wird.

13. Verfahren nach Anspruch 12, **dadurch gekennzeichnet, dass** der in Schritt c) abgeschiedene Belebtschlamm in einer Konzentration von 35 g/l bis 55 g/l in das Belebtschlammbecken (1) rückgeführt wird.

14. Verfahren nach einem der Ansprüche 1 bis 13, **dadurch gekennzeichnet, dass** der im Schritt b) abgeschiedene Belebtschlamm in einer Konzentration von etwa 2 g/l bis etwa 10 g/l, insbesondere von etwa 2,5 g/l bis etwa 7 g/l, weiter insbesondere von etwa 4 g/l bis etwa 5,5 g/l dem Entwässerungsaggregat (3) zugeführt wird.

15. Vorrichtung zum Reinigen von Abwässern, insbesondere von Abwässern der Papierindustrie, mit einem Belebtschlammbecken (1) zur aeroben Klärung des Abwassers, einem Nachklärbecken (2) zur Fest-/Flüssigtrennung sowie einem Entwässerungsaggregat (3) zur Schlammentwässerung, **dadurch gekennzeichnet, dass** das Nachklärbecken (2) und das Entwässerungsaggregat (3) hydraulisch verbunden sind, derart, dass dem Entwässerungsaggregat (3) im Nachklärbecken (2) abgeschiedener Belebtschlamm zuführbar ist, wobei das Belebtschlammbecken (1) eine Zuleitung (5) für die Zufuhr von Rücklaufschlamm aus dem Entwässerungsaggregat (3) und eine weitere Zuleitung (6) für Rücklaufschlamm aus dem Nachklärbecken (2) umfasst.

16. Vorrichtung nach Anspruch 15, **dadurch gekennzeichnet, dass** das Entwässerungsaggregat (3) einen Siebbandfilter aufweist.

17. Vorrichtung nach Anspruch 15 oder 16, **gekennzeichnet durch** eine Einrichtung zum konstanten Fördern von Abwasser-Belebtschlammgemisch aus der Belebtschlammbecken (1) zum Entwässerungsaggregat (3).

18. Vorrichtung nach Anspruch 17, **dadurch gekennzeichnet, dass** die Einrichtung zum konstanten Fördern eine Kreiselpumpe aufweist.

19. Vorrichtung nach einem der Ansprüche 15 bis 17, **dadurch gekennzeichnet, dass** dem Belebtschlammbecken (1) mindestens ein Scheibentauchkörper zugeordnet ist.

20. Vorrichtung nach einem der Ansprüche 15 bis 19, **dadurch gekennzeichnet, dass** dem Nachklärbecken (2) ein Filtersystem(4) nachgeschaltet ist.

21. Vorrichtung nach Anspruch 20, **dadurch gekennzeichnet, dass** das Filtersystem (4) einen Zweischichtfilter enthält.

22. Vorrichtung nach einem der Ansprüche 20 oder 21, **dadurch gekennzeichnet, dass** das Entwässerungsaggregat (3) einen Ablauf aufweist, der mit dem Filtersystem (4) verbunden ist.

23. Vorrichtung nach einem der Ansprüche 15 bis 22, **dadurch gekennzeichnet, dass** dem Belebtschlammbecken (1) eine mechanische Reinigungsstufe vorgeschaltet ist.

24. Vorrichtung nach mindestens einem der Ansprüche 15 bis 22, **dadurch gekennzeichnet, dass** dem Entwässerungsaggregat (3) eine Dosier- und Zugabeeinrichtung zur Zugabe von Flockungshilfsmitteln vorgeschaltet ist.

25. Vorrichtung nach Anspruch 22, **dadurch gekennzeichnet, dass** eine Messeinrichtung zum Messen des Trübstoffgehaltes des gereinigten Abwassers dem Entwässerungsaggregat (3) nachgeschaltet ist und dass eine Steuereinrichtung zur Steuerung der Dosiereinrichtung in Abhängigkeit des in der Messeinrichtung gemessenen Trübstoffgehalts vorhanden ist.

## Claims

1. A method for the purification of effluent, especially effluent from the paper industry, comprising the following method steps:
a) aerobic clarification of the effluent by means of activated sludge in an activated sludge tank (1);
b) settling of at least a part of the effluent-activated sludge mixture leaving the activated sludge tank (1) in a settling tank (2) ;
c) dehydrating a part of the activated sludge separated in the settling tank (2) in a dehydration unit (3);
d) returning at least a part of the activated sludge separated in steps b) and c) to the activated sludge tank (1).

2. A method according to claim 1, **characterised in that** the entire effluent-activated sludge mixture from the activated sludge tank (1) is fed to the settling tank (2) in step b).

3. A method according to claim 1, **characterised in that**, in step b), a part of the effluent-activated sludge mixture is fed from the activated sludge tank (1) to the settling tank (2) and a further part of the effluent-activated sludge mixture is fed from the activated sludge tank (1) to the dehydration unit (3).

4. A method according to any one of claims 1 to 3, **characterised in that** the purified effluent from the settling tank (2) is fed to a filter system (4).

5. A method according to any one of claims 1 to 4, **characterised in that** the purified effluent from the dehydration unit (3) is at least partially fed to the filter system (4).

6. A method according to claim 4 or claim 5, **characterised in that** the purified effluent from the settling tank (2) is fed to a double-layer filter as the filter system (4).

7. A method according to any one of claims 1 to 6, **characterised in that** the dehydration according to step c) takes place with a sieve belt filter as the dehydration unit (3).

8. A method according to any one of claims 3 to 7, **characterised in that** the effluent-activated sludge mixture leaving the activated sludge tank (1) and/or the settling tank (2) is fed to the dehydration unit (3) at a constant volume flow.

9. A method according to any one of claims 1 to 8, **characterised in that** the aerobic clarification according to step a) takes place by means of at least one biological disc.

10. A method according to any one of claims 1 to 9, **characterised in that** the activated sludge separated in step b) is returned at a concentration of about 2 g/l to about 10 g/l to the activated sludge tank (1).

11. A method according to claim 10, **characterised in that** the activated sludge separated in step b) is returned at a concentration of about 2.5 g/l to about 7 g/l, especially of about 4 g/l to about 5.5 g/l, to the activated sludge tank (1).

12. A method according to any one of claims 1 to 11, **characterised in that** the activated sludge separated in step c) is returned at a concentration of about 30 g/l to about 80 g/l to the activated sludge tank (1).

13. A method according to claim 12, **characterised in that** the activated sludge separated in step c) is returned at a concentration of 35 g/l to 55 g/l to the activated sludge tank (1).

14. A method according to any one of claims 1 to 13, **characterised in that** the activated sludge separated in step b) is fed at a concentration of about 2 g/l to about 10 g/l, in particular of about 2.5 g/l to about 7 g/l, furthermore, in particular of about 4 g/l to about 5.5 g/l, to the dehydration unit (3).

15. A device for the purification of effluent, especially effluent from the paper industry, with an activated sludge tank (1) for the aerobic clarification of the effluent, a settling tank (2) for solids/liquid separation and a dehydration unit (3) for sludge dehydration, **characterised in that** the settling tank (2) and the dehydration unit (3) are hydraulically connected in such a way that activated sludge separated in the settling tank (2) can be fed to the dehydration unit (3), the activated sludge tank (1) comprising a feed line (5) for the supply of return sludge from the dehydration unit (3) and a further feed line (6) for return sludge from the settling tank (2).

16. A device according to claim 15, **characterised in that** the dehydration unit (3) has a sieve belt filter.

17. A device according to claim 15 or claim 16, **characterised by** a mechanism for the constant conveying of effluent-activated sludge mixture from the activated sludge tank (1) to the dehydration unit (3).

18. A device according to claim 17, **characterised in that** the mechanism for constant conveying has a centrifugal pump.

19. A device according to any one of claims 15 to 17, **characterised in that** the activated sludge tank (1) is allocated at least one biological disc.

20. A device according to any one of claims 15 to 19, **characterised in that** a filter system (4) is connected downstream of the settling tank (2).

21. A device according to claim 20, **characterised in that** the filter system (4) contains a double-layer filter.

22. A device according to either of claim 20 or claim 21, **characterised in that** the dehydration unit (3) has a drain outlet connected to the filter system (4).

23. A device according to any one of claims 15 to 22, **characterised in that** a mechanical purification stage is connected upstream of the activated sludge tank (1).

24. A device according to at least any one of claims 15 to 22, **characterised in that** a metering and addition mechanism is connected upstream of the dehydration unit (3) in order to add flocculents.

25. A device according to claim 22, **characterised in that** a measuring mechanism for measuring the cloudy matter content of the purified effluent is connected downstream of the dehydration unit (3) and **in that** a control mechanism is present to control the metering mechanism depending on the cloudy matter content measured in the measuring mechanism.

## Revendications

1. Procédé pour épurer des eaux usées, en particulier des eaux usées de l'industrie du papier, présentant les étapes de procédé suivantes :
a) clarification aérobie des eaux usées par boue activée dans un bassin de boue activée (1) ;
b) décantation secondaire d'au moins une partie du mélange de boue activée d'eaux usées sortant du bassin de boue activée (1) dans un bassin de décantation secondaire (2) ;
c) déshydratation d'une partie de la boue activée précipitée dans le bassin de décantation secondaire (2) dans un ensemble de déshydratation (3) ;
d) recyclage d'au moins une partie de la boue activée déposée lors des étapes b) et c) dans le bassin de boue activée (1).

2. Procédé selon la revendication 1, **caractérisé en ce que**, à l'étape b), l'ensemble du mélange eaux usées-boue activée provenant du bassin de boue activée (1) est amené au bassin de décantation secondaire (2).

3. Procédé selon la revendication 1, **caractérisé en ce que**, à l'étape b), une partie du mélange eaux usées-boue activée provenant du bassin de boue activée (1) est amenée au bassin de décantation secondaire (2) et une autre partie du mélange eaux usées-boue activée provenant du bassin de boue activée (1) est amenée à l'ensemble de déshydratation (3).

4. Procédé selon l'une des revendications 1 à 3, **caractérisé en ce que** l'eau usée purifiée provenant du bassin de décantation secondaire (2) est amenée à un système de filtre (4).

5. Procédé selon l'une des revendications 1 à 4, **caractérisé en ce que** l'eau usée purifiée provenant de l'ensemble de déshydratation (3) est amenée au moins partiellement au système de filtre (4).

6. Procédé selon la revendication 4 ou 5, **caractérisé en ce que** l'eau usée purifiée provenant du bassin de décantation secondaire (2) est amenée à un filtre à deux couches comme système de filtre (4).

7. Procédé selon l'une des revendications 1 à 6, **caractérisé en ce que** la déshydratation a lieu après l'étape c) avec un filtre à bande à tamis comme ensemble de déshydratation (3).

8. Procédé selon l'une des revendications 3 à 7, **caractérisé en ce que** le mélange eaux usées-boue activée sortant du bassin de boue activée (1) et/ou du bassin de décantation secondaire (2) est amené à l'ensemble de déshydratation (3) avec un flux volumique constant.

9. Procédé selon l'une des revendications 1 à 8, **caractérisé en ce que** la décantation aérobie s'effectue après l'étape a) par au moins un disque biologique.

10. Procédé selon l'une des revendications 1 à 9, **caractérisé en ce que** la boue activée précipitée à l'étape b) est recyclée dans une concentration d'environ 2 g/l jusqu'à environ 10 g/l dans le bassin de boue activée (1).

11. Procédé selon la revendication 10, **caractérisé en ce que** la boue activée déposée à l'étape b) est recyclée dans une concentration d'environ 2,5 g/l jusqu'à environ 7 g/l, en particulier d'environ 4 g/l jusqu'à environ 5,5 g/l dans le bassin de boue activée (1).

12. Procédé selon l'une des revendications 1 à 11, **caractérisé en ce que** la boue activée précipitée à l'étape c) est recyclée dans une concentration d'environ 30 g/l jusqu'à environ 80 g/l dans le bassin de boue activée (1).

13. Procédé selon la revendication 12, **caractérisé en ce que** la boue activée précipitée à l'étape c) est recyclée dans une concentration de 35 g/l jusqu'à 55 g/l dans le bassin de boue activée (1).

14. Procédé selon l'une des revendications 1 à 13, **caractérisé en ce que** la boue activée précipitée à l'étape b) est amenée dans une concentration d'environ 2 g/l jusqu'à environ 10 g/l, en particulier d'environ 2,5 g/l jusqu'à environ 7 g/l, également en particulier d'environ 4 g/l jusqu'à environ 5,5 g/l à l'ensemble de déshydratation (3).

15. Dispositif pour épurer des eaux usées, en particulier des eaux usées de l'industrie du papier, comprenant un bassin de boue activée (1) pour la clarification aérobie des eaux usées, un bassin de décantation secondaire (3) pour la séparation solide/liquide et un ensemble de déshydratation (3) pour la déshydratation de la boue, **caractérisé en ce que** le bassin de décantation secondaire (2) et l'ensemble' de déshydratation (3) sont reliés de façon hydraulique, de telle sorte que de la boue activée précipitée dans le bassin de décantation secondaire (2) peut être amenée à l'ensemble de déshydratation (3), le bassin de boue activée (1) comprenant une conduite d'arrivée (5) pour l'arrivée de boue de recyclage provenant de l'ensemble de déshydratation (3) et une autre conduite d'arrivée (6) pour la boue de recyclage provenant du bassin de décantation secondaire (2).

16. Dispositif selon la revendication 15, **caractérisé en ce que** l'ensemble de déshydratation (3) présente un filtre à bande à tamis.

17. Dispositif selon la revendication 15 ou 16, **caractérisé par** un dispositif pour le transport constant de mélange eaux usées-boue activée du bassin de boue activée (1) à l'ensemble de déshydratation (3).

18. Dispositif selon la revendication 17, **caractérisé en ce que** le dispositif pour le transport constant présente une pompe centrifuge.

19. Dispositif selon l'une des revendications 15 à 17, **caractérisé en ce qu'**au moins un disque biologique est attribué au bassin de boue activée (1).

20. Dispositif selon l'une des revendications 15 à 19, **caractérisé en ce qu'**un système de filtre (4) est placé en aval du bassin de décantation secondaire (2).

21. Dispositif selon la revendication 20, **caractérisé en ce que** le système de filtre (4) contient un filtre à deux couches.

22. Dispositif selon l'une des revendications 20 et 21, **caractérisé en ce que** l'ensemble de déshydratation (3) présente un écoulement, qui est relié au système de filtre (4).

23. Dispositif selon l'une des revendications 15 à 22, **caractérisé en ce qu'**un niveau de nettoyage mécanique est placé en amont du bassin à boue activée (1).

24. Dispositif selon au moins l'une des revendications 15 à 22, **caractérisé en ce qu'**un dispositif de dosage et d'addition est monté en amont de l'ensemble de déshydratation (3) pour l'addition d'agents auxiliaires de floculation.

25. Dispositif selon la revendication 22, **caractérisé en ce qu'**un dispositif de mesure est placé en aval de l'ensemble de déshydratation (3) pour la mesure de la teneur en matière opaque des eaux usées purifiées et **en ce qu'**un dispositif de commande pour la commande du dispositif de dosage est présent en fonction de la teneur en matière opaque mesurée dans le dispositif de mesure.
